Europäisches Patentamt

European Patent Office

Office européen des brevets

(11) Publication number: 0 266 100
A2

# EUROPEAN PATENT APPLICATION

(21) Application number: 87309138.3

(22) Date of filing: 15.10.87

(51) Int. Cl.⁴: B29C 41/06 , B29C 41/46

(30) Priority: 15.10.86 IE 2716/86

(43) Date of publication of application:
04.05.88 Bulletin 88/18

(84) Designated Contracting States:
AT BE CH DE ES FR GB GR IT LI LU NL SE

(71) Applicant: DALILY LIMITED
31/33 The Triangle Ranelagh
Dublin 6(IE)

(72) Inventor: Gregory, Bernard Joseph
36 Aughameen Park
Dundalk County Louth(IE)

(74) Representative: Barlow, Roy James et al
J.A.KEMP & CO. 14, South Square Gray's Inn
London WC1R 5EU(GB)

(54) Rotational moulding apparatus.

(57) Rotational moulding apparatus 1 comprises a mould support provided by two transverse support members (6,7) for supporting a mould (2). The transverse members (6,7) are mounted on an inner frame (10) which in turn is mounted on an outer frame (11). The inner and outer frames (10,11) are simultaneously rotatable about first and second axes (12,13) which extend substantially perpendicular to each other. Heating and cooling medium for the mould (2) is carried by common pipework (35) including an inlet manifold (28) and an outlet manifold (33) to which the mould (2) is connected by flexible pipework (29).

Fig.1

The invention relates to a rotational moulding apparatus and in particular to improvements in and relating to jacketed or ovenless rotational moulding apparatus.

In particular the invention relates to an apparatus for rotational moulding of the type comprising a mould support and means for rotating the mould support about first and second axes which extend generally transversely of each other.

Rotational moulding apparatus of this type is known. Such apparatus is generally used with a jacketed or ovenless mould to form a hollow article such as a storage tank. Generally the procedure is to place a quantity of moulding material such as plastics, in a powder or liquid form in the cavity of the mould and to rotate the mould simultaneously about the two axes while the plastics is in a fluid condition so that the plastics is spread over the inside surface of the mould to form a hollow article on cooling of the plastics.

Some of the problems with known apparatus for rotational moulding is that they are of expensive and complex construction and are generally inflexible in that often they are dedicated to moulding just a limited number of plastics materials.

This invention is directed towards providing an improved apparatus for rotational moulding which will be both relatively inexpensive and versatile in use.

The invention is characterised in that the means for rotating the mould support comprises an inner frame carrying the mould support, an outer frame carrying the inner frame, first drive means for rotating the outer frame about the first axis, and second drive means for rotating the inner frame about the second axis.

One advantage of this arrangement is that because separate inner and outer frames are used the apparatus is of relatively simple construction and relatively simple drive mechanisms may be used for rotating the inner and outer frames.

In one embodiment of the invention the apparatus is characterised in that the axes extend substantially at right angles to each other.

The advantage of this feature is that a more efficient moulding operation is achieved with relatively uniform cross section of moulded hollow article.

In another embodiment of the invention the mould support is adjustably mounted to the inner frame.

This is a particularly important feature of the invention and one of the advantages is that it allows the moulding machine to be used for a wide range of different moulds or indeed for a plurality of moulds of the same or different type, thus providing a moulding machine of versatile construction.

Preferably the mould support comprises one or more elongate support arms, at least one of the support arms being adjustable in position to accommodate varying sizes and/or numbers of moulds.

The advantage of this particular type of mould support is that it is relatively easy to change the location of the mould support to accommodate varying sizes and/or numbers of moulds.

In another embodiment of the invention the apparatus includes means for conveying a heating and cooling medium to the inner support frame.

The advantage of this feature is that it facilitates heating and cooling of the mould during a moulding operation.

In a particularly preferred embodiment of the invention the means for conveying the heating and cooling medium includes an inlet manifold and an outlet manifold, each manifold having a plurality of connections for connecting a mould to the inlet and outlet manifolds.

This is a particularly important feature of the invention as the use of manifolds facilitates connection to a range of sizes of mould and/or moulds adding to the versatility of the apparatus. In addition the use of manifolds having a plurality of connections facilitates a relatively uniform temperature around the mould.

In a preferred embodiment of the invention the means for conveying a heating medium and a cooling medium comprises common pipework through which both heating and cooling medium is led.

The advantage of this feature is that only a single pipe run is required to carry both heating and cooling medium. Typically the heating and cooling medium is oil which is heated and cooled and pumped at desired temperature and pressure through the pipework, into and out of the mould using control apparatus which is not part of this invention.

In one embodiment of the invention means such as an overshaft rotary union are provided for introducing additional material into the mould.

During the moulding process, it is often advantageous to introduce materials into the mould. For example to purge the mould with inert gas or automized water mist for cooling the plastic, addition of colorant or the like.

In one embodiment of the invention the second drive means comprises a direct drive such as a chain and sprocket mechanism and the first drive means comprises means for imparting a rocking motion such as a four bar crank mechanism, the coupler arm of which may be defined by an hydraulic ram.

The advantges of such a drive means is that they are of relatively simple and well proven construction.

The invention will be more clearly understood from the following description thereof given by way of example only with reference to the accompanying drawings in which:

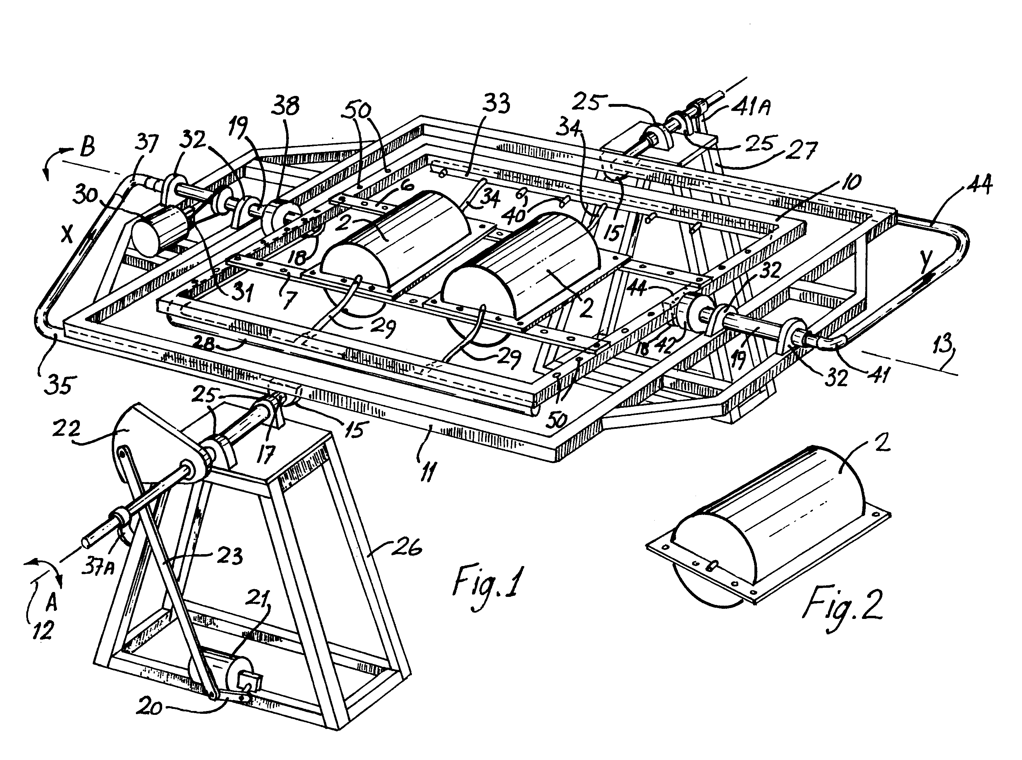

Fig. 1 is a perspective view of a moulding apparatus according to the invention,

Fig. 2 is a perspective view of a mould for use with the apparatus,

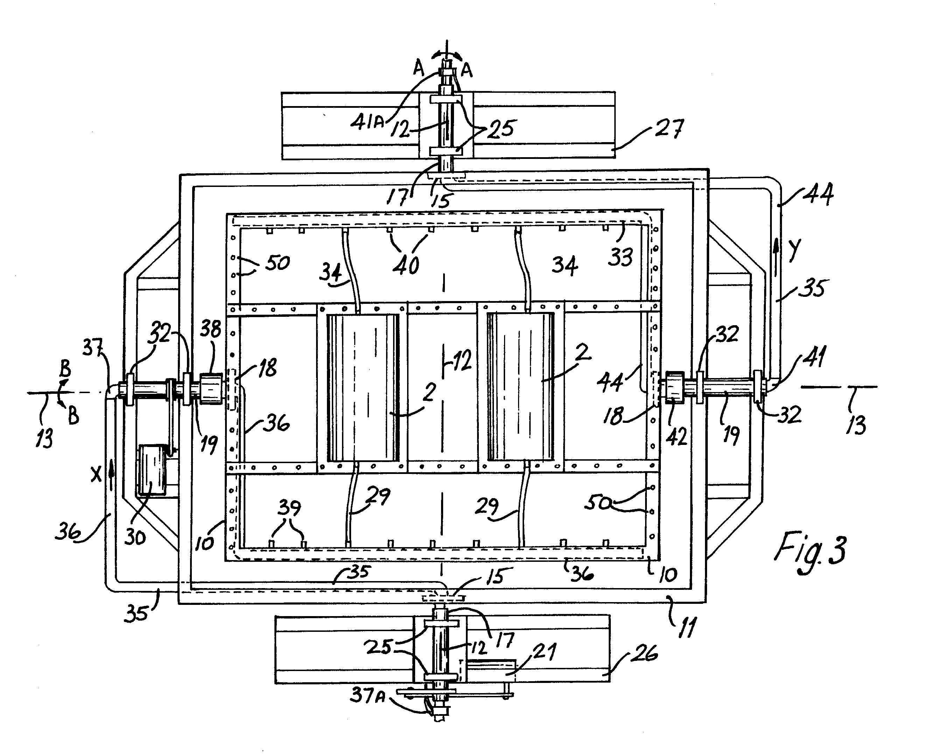

Fig. 3 is a schematic plan view of the apparatus,

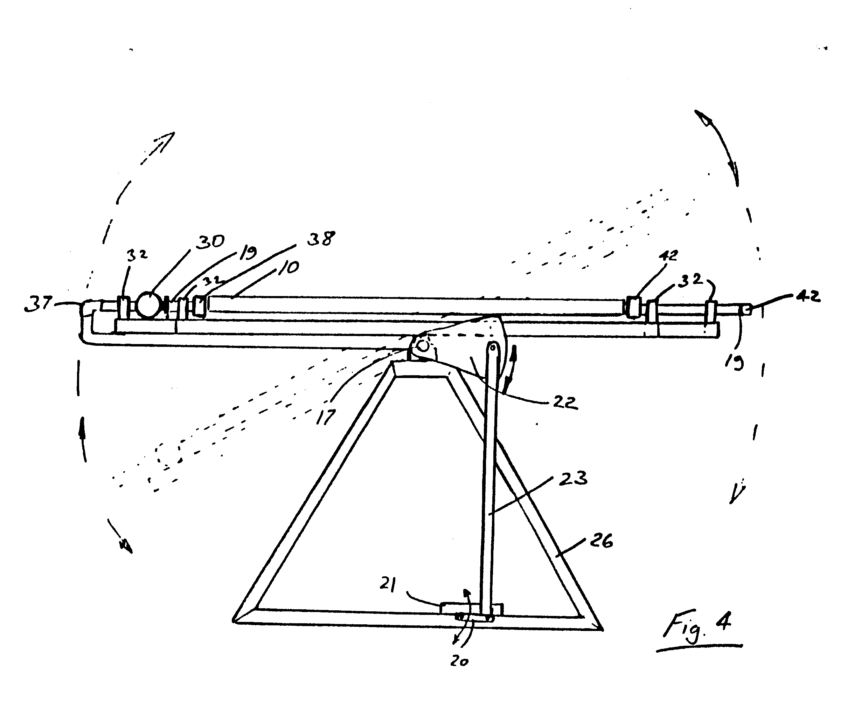

Fig. 4 is side elevational view of the apparatus of Fig. 1,

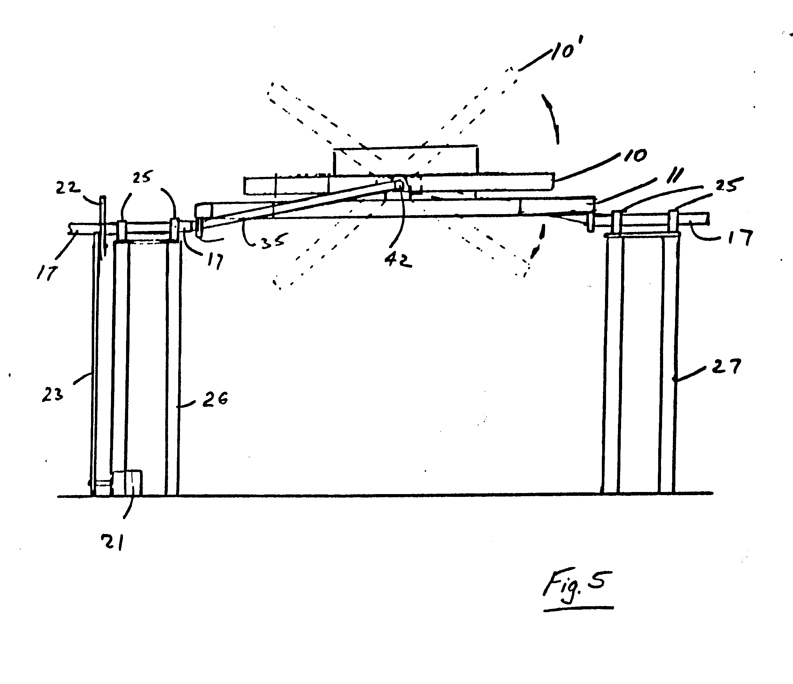

Fig. 5 is an end elevational view of the apparatus of Fig. 1,

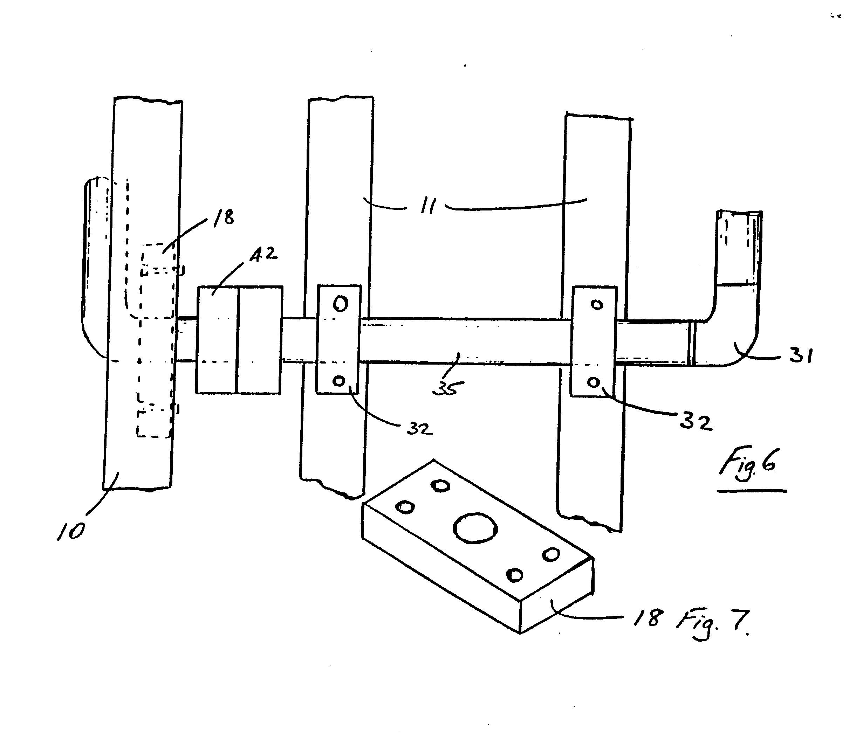

Fig. 6 is a plan view on an enlarged scale of a detail of the apparatus of Fig. 1, and

Fig. 7 is a perspective view of portion of the detail of Fig 1.

Referring to the drawings there is illustrated a rotational moulding apparatus according to the invention indicated generally by the reference numeral 1. The moulding apparatus 1 is a single station rotational moulding machine for use with a jacketed or ovenless mould 2. The mould 2 typically comprises an inner shell defining a cavity formed in the shape of the article to be produced and an outer shell spaced-apart from the inner shell and defining therebetween a chamber through which first hot and then cold liquid are circulated while the mould is rotated in the apparatus. Plastics in a powdered or liquid form is first introduced into the mould and when the mould is closed hot and then cold liquid are circulated through the chamber to first melt the powdered plastics and then cool it down while the mould is rotating to form the plastics into the desired shape.

The moulding apparatus 1 comprises a mould support which in this case comprises two elongate spaced-apart elongate transverse arms 6,7 on which the mould 2 is mounted. The mould supporting arms 6,7 are carried by an inner frame 10 which in turn is carried by an outer frame 11. The frames 10,11 are both in this case substantially of rectilinear shape in plan and may be formed in any suitable way for example from box, angle, channel or any combination of such sections.

The outer frame 11 is rotatable in the direction of the arrows A about a first or major axis 12 while the inner frame 10 is rotatable about a second or minor axis 13 which extends transversely, and in this case perpendicular to the major axis 12. The outer frame 11 is fixed by flanges 15 to two first shafts 17 which are rotatable about the major axis 12. Similarly the inner frame 10 is fixedly mounted by flanges 18 to two second shafts 19 which are rotatable about the minor axis 13.

One of the first shafts 16 is rocked about the major axis 12 in the direction of the arrows A to up to 180° by a first drive means which in this case comprises a four bar crank linkage mechanism. Referring particularly to Fig. 2 the crank linkage mechanism comprises a crank arm 20 driven by a drive motor 21, a lever arm 22 for rotating the first shafts 17 and hence the outer frame 11 and a coupler arm 23 which is pivotally connected to and extends between the crank arm 20 and the lever arm 22. The lever arm 22 is in this case of arcuate shape and the coupler arm 23 may be attached to the lever arm in any one of a plurality of different positions to vary the angle through which the lever arm 22 and hence the first shafts 17 and outer frame 11 are rocked. The first shafts 17 are rotatably mounted in first bearings 25 which are mounted on fixed frames 26 and 27 respectively.

One of the second shafts 19 is driven by a second drive motor 30 through a direct link drive mechanism such as a chain and sprocket mechanism 31 which rotates the shaft 19 in either the clockwise or anti-clockwise direction. The second shafts 19 are rotatably mounted in bearings 32 which are fixedly mounted to the outer frame 11.

Means for conveying hot and cold liquids such as hot and cold oil to a mould mounted on the inner frame 2 is provided by pipework 35 comprising an inlet section 36 through which oil flows in the direction of the arrow X, the pipework being led through rotary unions 37,37A to an inlet manifold 28 having a series of inlet connections 39 from which oil is led to the mould 2 through flexible pipes 29. Circulating oil is led away from the mould 2 in the direction of the arrow Y through outlet flexible pipes 34 which are connected to a series of outlet connections 40 in an outlet manifold 33 to an outlet section 44 of the pipework 25. The outlet section 44 of the pipework is led through second rotary unions 41,41A.

The transverse elongate support arms 6,7 are adjustable in position in the inner frame 3 for example, by mounting the arms 6,7 by bolting them to any suitable set of plurality of locating holes 50.

Means for introducing additional materials such as purging inert gas, coolant or colorant, into the mould is provided by overshaft rotary unions 38,42.

In use, a mould having a preformed cavity in the desired shape of plastics article is first mounted on the support arms 6,7 of the inner frame 10. Plastics powder is then introduced into the mould which is clamped into position. Flexible hoses 29,34 are coupled to the mould from the inlet and outlet connections 39,40 respectively. The first and second motors 21,30 are then started and the inner and outer frames 10,11 are simultaneously rotated about the minor and major axes 12,13 respectively. Hot oil is then introduced into the outer casing of the mould 2 through the pipework 35 to melt the powdered plastics in the mould. When the plastics is in a fluid state hot oil is purged from the pipework by cold oil introduced into the pipework. Cold oil is then circulated through the pipework 35, and the mould 2 until the plastics sets from its molten to its hard state forming the desired shape. The mould is then opened and the finished plastics article removed, for example by vacuum suction, compressed air or manually. As the mould is being rocked about the major axis and rotated about the minor axis the plastics material flows to take the shape of the mould cavity.

When the finished plastics article is removed from the mould the cycle is repeated.

To change the mould, the mould is simply dismounted from the support arms 6,7 and another mould is placed in position, if necessary, after adjusting the support arms to accommodate the new mould. It will of course be appreciated that more than one mould may be mounted on the support arms so that a number of different plastics articles may be formed using different moulds at the same time or a number of the same plastics articles may be formed at the same time.

Because conduction heating is used to melt the plastics fast heating cycle times may be achieved making the most economical use of heat since only the moulds are heated. Further, very accurate temperature control may be achieved. In addition, rotational moulding techniques using hot liquid conduction allows almost all plastics including those not usually processed or associated with conventional rotational moulding equipment to be processed including acetyl and ABS plastics.

The rotary unions may also be used to convey inert gases such as nitrogen and/or carbon dioxide to the mould. Such gases are used in moulding a plastic which is easily oxidised. Such gases may also be used as a coolant to cool the plastic and speed up the cooling cycle time. The rotary unions may further be used to carry a compressed air line to open and close the mould clamps. This assists in automating the rotational moulding method.

Any suitable flexible hoses may be used however those having an automatic seal which closes the hoses when they are disconnected are particularly preferred as residue oil is contained in the hoses and mould without loss.

A major advantage of the rotary moulding apparatus according to the invention is that moulds may be changed very quickly resulting in minimum down time.

It will be appreciated that the term "rotation" is used in this specification relates to movement about an axis. The movement may be a movement through a full 360° or any part thereof.

It will also be appreciated that any suitable drive mechanisms may be employed. For example, instead of a four bar crank mechanism driven by a motor, the coupler arm of the mechanism may be provided by an hydraulic ram.

Further, it will be appreciated that at least the rotary unions 37A,41A may be substituted by suitable swivel joints.

## Claims

1. Apparatus (1) for rotational moulding comprising a mould support (6,7) and means (10,11,21,30) for rotating the mould support about first and second axes (12,13) which extend generally transversely of each other, characterised in that the means for rotating the mould support (6,7) comprises an inner frame (10) carrying the mould support (6,7), an outer frame (11) carrying the inner frame (10), first drive means (21,20,22,23) for rotating the outer frame (11) about the first axis (12), and second drive means (30,31) for rotating the inner frame (10) about the second axis (13).

2. Apparatus as claimed in claim 1 characterised in that the axes (12,13) extend substantially at right angles to each other.

3. Apparatus as claimd in claim 1 or claim 2 characterised in that the mould support (6,7) is adjustably mounted to the inner frame (10).

4. Apparatus as claimed in claim 3 wherein the mould support (6,7) comprises one or more elongate support arms (6,7), at least one of the support arms being adjustable in position to accommodate varying sizes and/or numbers of moulds (2).

5. Apparatus as claimed in any preceding claim characterised in that the apparatus includes means (35) for conveying a heating medium and a cooling medium to the inner support frame (6,7).

6. Apparatus as claimed in claim 5 characterised in that the means (35) for conveying the heating and cooling medium includes an inlet manifold (28) provided on the inner frame (10) and an outlet manifold (33) provided on the inner frame (10), each manifold (33,28) having a plurality of connections (39,40) for connecting a mould (2) to the inlet and outlet manifolds (28,33).

7. Apparatus as claimed in claim 5 or claim 6 characterised in that the means for conveying a heating medium and a cooling medium comprises common pipework (35) through which both heating and cooling medium is led.

8. Apparatus as claimed in any of claims 6 to 8 characterised in that means (38,42) are provided for introducing additional material into the pipework and/or mould.

9. Apparatus as claimed in any of claims 1 to 8 characterised in that the second drive means comprises a direct drive such as a chain and sprocket mechanism (31) and the first drive means comprises means for imparting a rocking motion such as a four bar crank mechanism (20,23,22), the coupler arm of which may be defined by a ram.

Fig.1

Fig.2

0 266 100

Fig.3

0 266 100

Fig. 4

37 32 30 19 38 10 32 42 32 42

17 22 23 26 21 20

0 266 100

Fig. 5

0 266 100

18

42

11

31

35

32

32

10

*Fig.6*

18 *Fig. 7.*